# EUROPÄISCHE PATENTSCHRIFT

(11) **EP 2 354 687 B1**
(45) Veröffentlichungstag und Bekanntmachung des Hinweises auf die Patenterteilung: **26.09.2012**
(21) Anmeldenummer: 10152568.1
(22) Anmeldetag: 03.02.2010
(51) Int. Cl.: F24F 1/01, F24F 5/00, F24F 13/06, F24F 13/10

(54) **Deckenluftauslass für klimatechnische Anlagen**
Cover air outlet for air conditioning facilities
Ouverture de plafond pour installations climatiques

(43) Veröffentlichungstag der Anmeldung: 10.08.2011
(73) Patentinhaber: TROX GmbH, 47506 Neukirchen-Vluyn (DE)
(72) Erfinder: Scherder, Dirk, 47798 Krefeld (DE); Joneleit, Ralf, 47445 Moers (DE)
(74) Vertreter: Stark, Walter

(56) Entgegenhaltungen:
- EP-A1- 0 080 606
- DE-A1-102006 030 830
- US-A1- 2002 062 948
- US-A1- 2005 005 585

## Beschreibung

Die Erfindung betrifft einen Deckenluftauslass für klimatechnische Anlagen, mit einem, insbesondere langgestreckt ausgebildeten, aus einer Gehäusewandung bestehenden Gehäuse mit einem Zulufteinlass und mit wenigstens einem raumseitigen Luftauslass, wobei der Zulufteinlass in einen, vorzugsweise in dem Gehäuse befindlichen, und insbesondere sich längs des Gehäuses erstreckenden, Verteilerraum mündet, wobei der Verteilerraum zumindest eine in Richtung des Luftauslasses weisende Injektionsdüse aufweist und wobei raumseitig neben dem(den) Luftauslass (Luftauslässen) ein Raumlufteinlass zur Induktion von Raumlauft vorgesehen ist.

Derartige Deckenluftauslässe sind in verschiedenen Ausführungen bekannt (Siehe z.B. Patentdokument US-A-2002062948). Sie sollen die von einer Klimaanlage gelieferte Zuluft mehr oder weniger gleichmäßig im Raum verteilen. Damit über derartige Deckenluftauslässe gekühlte Zuluft in den Raum eingeblasen werden kann, muss eine dem Deckenluftauslass in Strömungsrichtung gesehen vorgelagerte Kältemaschine vorgesehen sein.

Aufgabe der Erfindung ist es, den vorgenannten Nachteil zu vermeiden und einen Deckenluftauslass anzugeben, der ohne die Verwendung einer separaten Kältemaschine zumindest eine gewisse Kühlung der Zuluft ermöglicht.

Diese Aufgabe wird dadurch gelöst, dass im Bereich des Raumlufteinlasses ein Phasenwechselmaterial vorgesehen ist und zumindest einer Injektionsdüse eine Einrichtung zugeordnet ist, die zwischen einer ersten Einstellung und einer zweiten Einstellung veränderbar ist, wobei in der ersten Einstellung eine Induktion der durch das Phasenwechselmaterial hindurch gezogenen Raumluft durch Richten des zumindest überwiegenden Anteils der Zuluft auf den Luftauslass gegeben ist und in der zweiten Einstellung ein Strömen zumindest des überwiegenden Anteils der Zuluft durch das Phasenwechselmaterial hindurch in den zu belüftenden Raum gegeben ist. Der Deckenluftauslass kann eine runde oder eine eckige sowie quadratische oder rechteckige Ausgestaltung aufweisen. Dabei kann zumindest der überwiegende Anteil der Zuluft auf den Luftauslass gegeben werden oder aber auch der komplette Anteil. Gleichermaßen kann ein überwiegender Anteil der Zuluft durch das Phasenwechselmaterial hindurch in den zu belüftenden Raum gegeben oder aber auch der ganze Anteil gegeben werden.

Das Phasenwechselmaterial, auch Phasenübergangsmaterial genannt, besteht beispielsweise aus Salzhydraten und/oder Paraffinen, die beim Phasenübergang Wärme speichern und abgeben. Die Ausnutzung des Phasenübergangs fest-flüssig ist dabei das am häufigsten genutzte Prinzip. Beim Aufladen des Phasenwechselmaterials werden meist spezielle Salze oder Paraffine als Speichermedium geschmolzen, die dabei sehr viel Wärmeenergie (Schmelzwärme) aufnehmen. Da dieser Vorgang reversibel ist, gibt das Speichermedium genau diese Wärmemenge beim Erstarren wieder ab.

Ein Phasenwechselmaterial eignet sich besonders gut als Speichermedium, weil schon im Phasenwechsel sehr hohe Energiemengen aufgenommen bzw. abgegeben werden, ohne dass sich die Temperatur des Phasenwechselmaterials dabei wesentlich ändert.

Das Phasenwechselmaterial selbst kann für die Raum- bzw. Zuluft durchgängig und damit durchströmbar sein. Es ist aber auch möglich, dass das Phasenwechselmaterial in einer Konstruktion, wie einem Kanalsystem, vorhanden ist, wobei dann die Konstruktion selbst durchströmt wird.

In der Nacht wird eine Einstellung gewählt, bei der zumindest der überwiegende Anteil der Zuluft oder auch die komplette Zuluft durch das Phasenwechselmaterial hindurch in den zu belüftenden Raum strömt. Dabei wird dem Phasenwechselmaterial Wärme entzogen.

Wird dann - beispielsweise im Laufe des Tages - eine Kühlung des Raumes gewünscht, wird der erfindungsgemäße Deckenluftauslass in der Einstellung betrieben, bei der zumindest der überwiegende Anteil der Zuluft oder auch die komplette Zuluft auf den Luftauslass gerichtet ist und dadurch eine Induktion der durch das Phasenwechselmaterial hindurch gezogenen Raumluft erfolgt. Beim Hindurchströmen gibt das Phasenwechselmaterial die gespeicherte Kälte an die Raumlauft ab. Dadurch wird die Raumluft abgekühlt, so dass der Raum durch Einblasen der Zuluft und der gekühlten induzierten Raumluft nicht nur belüftet, sondern auch gekühlt wird. Damit kann auf einen separaten Kühlkreislauf verzichtet und so auch die Energiekosten gesenkt werden. Das Phasenwechselmaterial kann auf der dem zu belüftenden Raum abgewandten Seite des Raumlufteinlasses angeordnet sein.

Das Gehäuse kann im seitlichen Schnitt gesehen viereckig, insbesondere rechteckig, ausgebildet sein. Dabei bietet sich an, wenn das Gehäuse im Bereich der dem Raum zugewandten Kante nach außen hin abgeschrägt ausgebildet ist, so dass sich das Gehäuse im Bereich des Luftauslasses erweitert.

Der obere Bereich des Deckenluftauslasses kann als Verteilerraum ausgebildet sein. Bei einer solchen Ausführungsform ist der Verteilerraum in dem Gehäuse angeordnet.

Der von dem Phasenwechselmaterial beanspruchte Raum kann kleiner als die Breite des Gehäuses unter Bildung zumindest eines seitlichen Luftauslassspaltes zwischen dem Phasenwechselmaterial und der zum Phasenwechselmaterial benachbarten Gehäusewandung des Gehäuses ausgebildet sein. Vorzugsweise ist nicht nur auf einer Seite des Phasenwechselmaterials ein Auslassspalt vorgesehen. Insbesondere bei einer lang gestreckten Ausbildung des Deckenluftauslasses bietet sich an, wenn auf beiden Seiten des Phasenwechselmaterials je ein Auslassspalt vorgesehen ist. Die dem Auslassspalt zugewandten Bereiche, d.h. die seitlichen Bereiche, des Phasenwechselmaterials können luftdicht oder aber auch luftdurchlässig ausgebildet sein. Im letzten Fall kann beispielsweise die Zuluft auch über die Seiten in das Phasenwechselmaterial strömen.

Zumindest eine Einrichtung kann als eine den Strömungsquerschnitt des Luftauslasses veränderbare Klappe ausgebildet sein. Die Klappe kann beispielsweise um eine horizontal gelagerte Schwenkachse schwenkbar gelagert sein. Vorzugsweise ist die Achse im Bereich des Luftauslasses angeordnet und die Klappe einseitig gelagert. Dann weist die Klappe entgegen die Strömungsrichtung. Die Klappe kann beispielsweise motorisch antreibbar sein.

In dem Verteilerraum können pro Luftauslass zumindest zwei Injektionsdüsen und eine entweder den Strömungsquerschnitt der einen oder den Strömungsquerschnitt der anderen Injektionsdüse freigebende Einrichtung derart angeordnet sein, dass die eine Injektionsdüse zur Induktion der durch das Phasenwechselmaterial hindurch gezogenen Raumluft durch Richten des zumindest überwiegenden Anteils der Zuluft auf den Luftauslass ausgerichtet ist und die andere Injektionsdüse zum Strömen zumindest des überwiegenden Anteils der Zuluft durch das Phasenwechselmaterial hindurch in den zu belüftenden Raum auf das Phasenwechselmaterial ausgerichtet ist. Durch Verlagerung jeder Einrichtung zwischen ihren beiden Endstellungen wird entweder die eine oder die andere Injektionsdüse freigegeben, so dass entweder die Zuluft durch das Phasenwechselmaterial geleitet wird oder Raumluft durch das Phasenwechselmaterial aufgrund der Induktion hindurch gezogen wird.

Zumindest eine Einrichtung kann als Schieber ausgebildet sein.

Insbesondere bei einer beidseitigen Anordnung von Luftauslässen und lang gestreckten Luftauslassspalten bietet sich an, wenn eine gemeinsame Einrichtung für mehrere, insbesondere sämtliche, Injektionsdüsen vorgesehen ist. Die Einrichtung, beispielsweise ein Schieber, ist dann so angeordnet, dass entweder die eine Gruppe oder die andere Gruppe an Injektionsdüsen freigegeben bzw. verschlossen ist.

Im Bereich des Raumlufteinlasses kann ein Wärmetauscher angeordnet sein. Dann ist auch eine Temperierung insbesondere der induzierten Raumluft möglich.

Bei einem bevorzugten Ausführungsbeispiel der Erfindung sind zumindest zwei, vorzugsweise in einem Gehäuse angeordnete, in ihrer generellen Ausrichtung im wesentlichen jeweils zueinander parallel ausgerichtete und mit dem Phasenwechselmaterial befüllte Speicherräume vorgesehen, wobei jeder Speicherraum von wenigstens zwei Speicherwänden begrenzt ist und die gegenüberliegenden Speicherwände zweier benachbarter Speicherräume zwischen sich einen Strömungskanal bilden, durch den die Zuluft oder die Raumluft strömt, wobei die Speicherwände der Speicherräume abwechselnd angeordnete erhabene Bereiche und vertiefte Bereiche aufweisen.

Dabei bietet es sich an, wenn die der generellen Erstreckung des Speicherraumes entsprechenden gegenüberliegenden Speicherwände benachbarter Speicherräume hinsichtlich ihrer jeweiligen erhabenen Bereiche und vertieften Bereiche so aufeinander abgestimmt sind, dass in Strömungsrichtung der Zuluft oder der Abluft gesehen im Bereich der gegenüberliegenden Speicherwände ein Strömungskanal mit über die gesamte Kanallänge und die gesamte Kanalbreite in im wesentlichen etwa einheitlicher Kanalhöhe resultiert.

Die jeweiligen Speicherwände eines jeden Speicherraums können aus einem eine im Wesentlichen einheitliche Wandstärke aufweisenden Material bestehen und über ihre Fläche verteilt jeweils abwechselnd angeordnete erhabene Bereiche und vertiefte Bereiche aufweisen, wobei von jedem Speicherraum seine beiden Speicherwände hinsichtlich ihrer jeweiligen erhabenen Bereiche und vertieften Bereiche so aufeinander abgestimmt sind, dass ihre jeweiligen vertieften Bereiche in entgegengesetzter Richtung voneinander wegweisend ausgerichtet sind und ihre jeweiligen erhabenen Bereiche einander zugewandt ausgerichtet sind, wobei die jeweiligen erhabenen Bereiche der Speicherwände direkt oder über ein Verbindungselement, insbesondere über eine Klebe-, Schweiß- oder Lötstelle, miteinander verbunden sind.

Die erhabenen Bereiche und die vertieften Bereiche können in etwa die gleiche Kontur haben.

Der Querschnitt dieser Bereiche kann sich zu den höchsten Teilbereichen der erhabenen Bereiche bzw. zu den tiefsten Teilbereichen der vertieften Bereiche hin verjüngen.

Zumindest eine Speicherwand kann als Blech, vorzugsweise als Aluminiumblech, ausgebildet sein. Zumindest eine Speicherwand kann aus Kunststoff sein.

Im Folgenden werden in den Zeichnungen dargestellte Ausführungsbeispiele der Erfindung erläutert. Es zeigen:
- Fig. 1: ein erstes Ausführungsbeispiel der Erfindung im Tagbetrieb,
- Fig. 2: den Gegenstand nach Fig. 2 im Nachtbetrieb,
- Fig. 3: den Gegenstand nach Fig. 1 mit einem zusätzlichen Wärmetauscher im Tagbetrieb,

- Fig. 4: den Gegenstand nach Fig. 2 im Nachtbetrieb,
- Fig. 5: ein zweites Ausführungsbeispiel der Erfindung im Tagbetrieb,
- Fig. 6: den Gegenstand nach Fig. 5 im Nachtbetrieb,
- Fig. 7: den Gegenstand nach Fig. 5 mit einem zusätzlichen Wärmetauscher im Tagbetrieb und
- Fig. 8: den Gegenstand nach Fig. 7 im Nachtbetrieb,
- Fig. 9: eine schräge Draufsicht auf eine mögliche konstruktive Ausgestaltung eines Phasenwechselmaterials,
- Fig.10: eine Draufsicht auf den Gegenstand nach Fig. 9,
- Fig.11: den Schnitt X―X durch den Gegenstand nach Fig. 10 und
- Fig. 12: einen Schnitt durch mehrere nebeneinander angeordnete Speicherräume.

In allen Figuren werden für gleiche bzw. gleichartige Bauteile übereinstimmende Bezugszeichen verwendet.

In den Figuren ist ein Deckenluftauslass dargestellt, der aus einem lang gestreckten Gehäuse mit einer Gehäusewandung 1 besteht. Der obere Bereich des Deckenluftauslasses ist als Verteilerraum 2 ausgebildet. In den Verteilerraum 2 mündet ein Zulufteinlass 3. Das Gehäuse ist im seitlichen Schnitt gesehen in etwa rechtwinklig ausgebildet.

Bezogen auf die beiden gegenüberliegenden Gehäusewandungen 1 ist mittig ein Phasenwechselmaterial 4 angeordnet. Das Phasenwechselmaterial 4 ist auf der dem zu belüftenden Raum abgewandten Seite eines Raumlufteinlasses 5 angeordnet.

Da der von dem Phasenwechselmaterial 4 beanspruchte Raum kleiner als die Breite des Gehäuses ist, befindet sich auf beiden Seiten des Phasenwechselmaterials 4 zwischen dem Phasenwechselmaterial 4 und der zum Phasenwechselmaterial 4 benachbarten Gehäusewandung 1 ein seitlicher Luftauslassspalt 6 mit einem raumseitigen Luftauslass 7. Im Bereich des Luftauslasses 7 ist jede Gehäusewandung 1 nach außen hin abgeschrägt, so dass das Gehäuse sich hier erweitert.

Wie den Figuren zu entnehmen ist, weist der Verteilerraum 2 pro Luftauslass 7 zumindest eine in Richtung des Luftauslasses 7 weisende Injektionsdüse 8 auf. Die erfindungsgemäßen Deckenluftauslässe weisen darüberhinaus auch Einrichtungen 9 auf, die zwischen einer ersten Einstellung und einer zweiten Einstellung veränderbar sind.

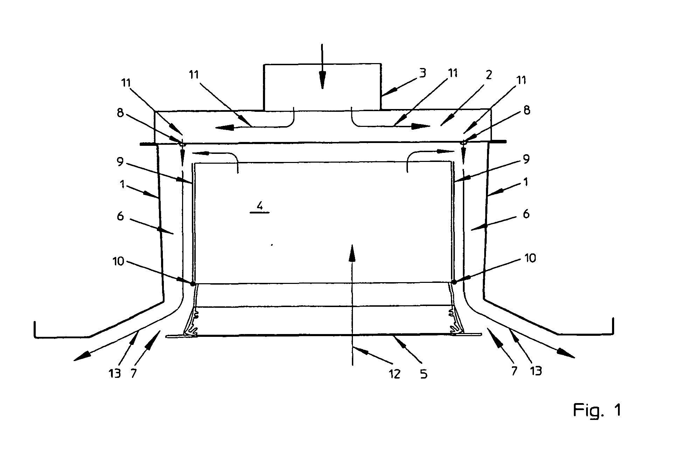

Bei dem in den Figuren 1 bis 4 dargestellten Ausführungsbeispiel ist jedem Luftauslass 7 als Einrichtung 9 eine den Strömungsquerschnitt des Luftauslasses 7 veränderbare Klappe vorgesehen, die um eine horizontal ausgerichtete Schwenkachse 10 schwenkbar gelagert ist. Die Klappe ist einseitig gelagert und weist entgegen die Strömungsrichtung.

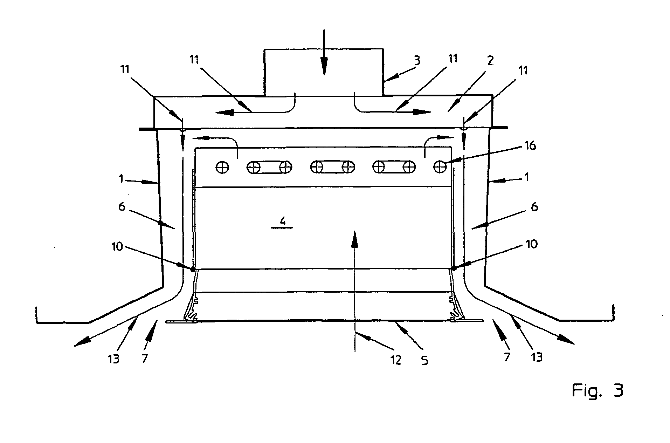

In den Figuren 1 und 3 ist die Stellung beider Klappen im Tagbetrieb dargestellt. Die Zuluft (Pfeil 11) strömt durch den Verteilerraum 2 und die Injektionsdüsen 8 in Richtung des jeweiligen Luftauslasses 7. Dabei wird Raumluft (Pfeil 12) induziert, die durch das Phasenwechselmaterial 4 hindurch gezogen wird. Beim Hindurchströmen gibt das Phasenwechselmaterial 4 die gespeicherte Kälte an die Raumlauft 12 ab. Dadurch wird die Raumluft 12 gekühlt. Die gekühlte Raumluft 12 und die Zuluft 11 mischen sich und werden zusammen in den zu belüftenden Raum eingeblasen (Pfeil 13).

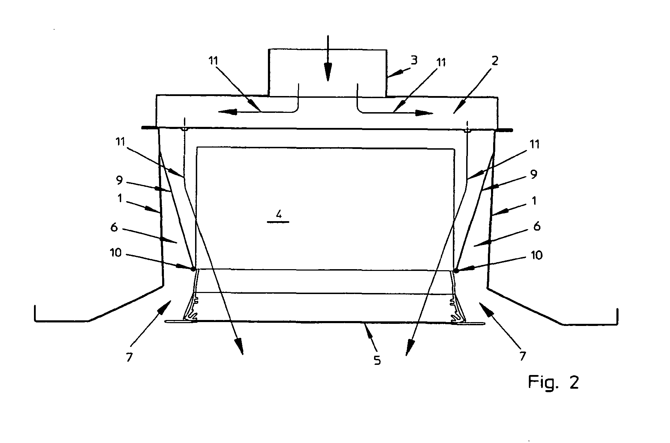

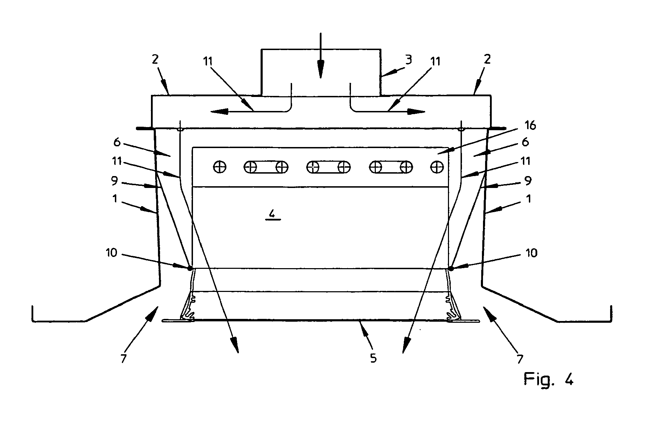

In den Figuren 2 und 4 ist die Stellung der Klappen im Nachtbetrieb dargestellt. Die Luftauslässe 7 sind verschlossen, so dass die kühle Zuluft 11, die von einer klimatechnischen Anlage von außen angesaugt wird, durch das Phasenwechselmaterial 4 geleitet. Dabei wird dem Phasenwechselmaterial 4 Wärme entzogen.

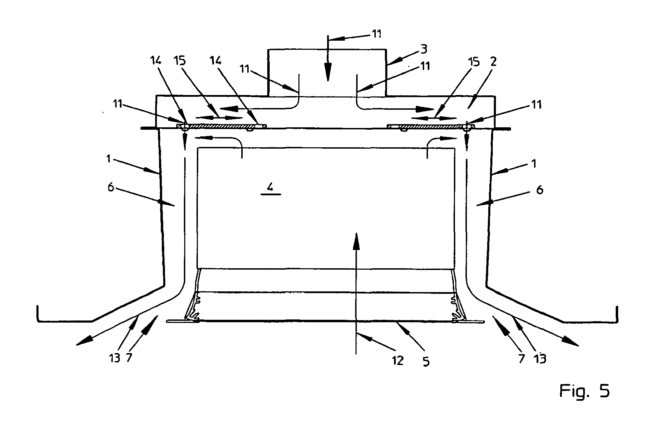

In den Figuren 5 bis 8 ist ein alternatives Ausführungsbeispiel dargestellt. Hier sind in dem Verteilerraum 2 zumindest zwei Injektionsdüsen 8 und eine entsprechende als Schieber ausgebildete Einrichtung 9 vorgesehen. Der Schieber weist zwei Ausnehmungen 14 auf, deren Abstand identisch mit dem Abstand der beiden zugehörigen Injektionsdüsen 8 ist.

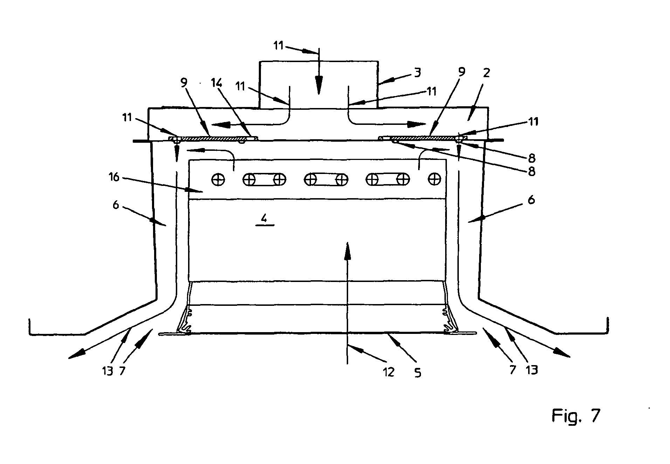

Durch Verschieben des Schiebers in Richtung des Pfeils 15 wird entweder der Strömungsquerschnitt der einen oder der Strömungsquerschnitt der anderen Injektionsdüse 8 freigegeben. Dadurch wird im Tagbetrieb - wie in den Figuren 5 und 7 dargestellt - die Zuluft (Pfeil 11) in Richtung des zugehörigen Luftauslasses 7 ausgeblasen und dabei die durch das Phasenwechselmaterial 4 hindurch gezogene Raumluft (Pfeil 12) induziert.

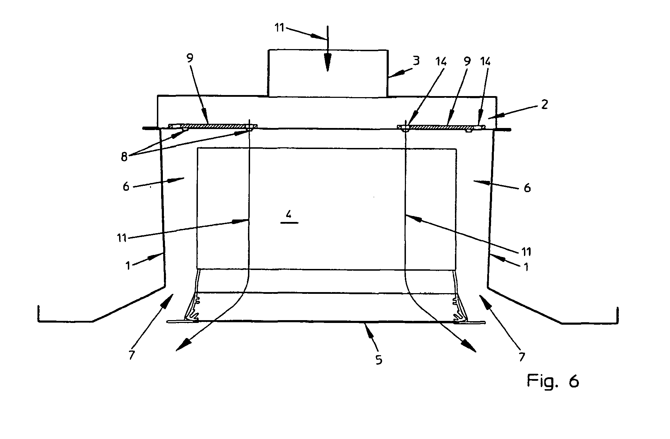

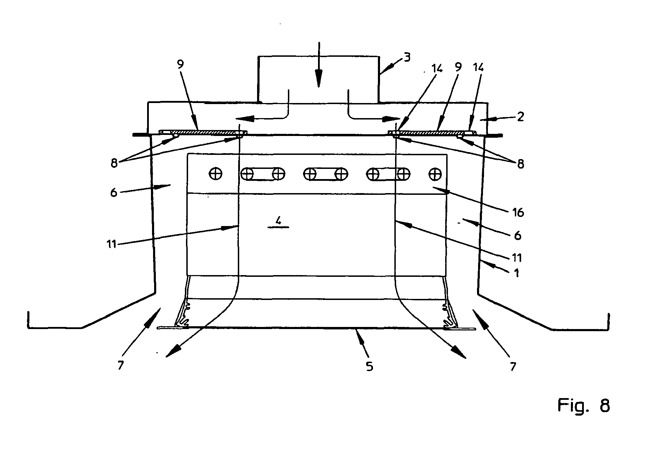

Im Nachtbetrieb, der in den Fig. 6 und 8 dargestellt ist, sind die im Wesentlichen auf die Luftauslässe 7 gerichteten Injektionsdüsen 8 geschlossen und die auf das Phasenwechselmaterial 4 gerichteten Injektionsdüsen 8 offen. Dadurch durchströmt die Zuluft (Pfeil 11) das Phasenwechselmaterial 4.

Selbstverständlich kann beispielsweise die Breite des Schiebers auch geringer als der Abstand der beiden zugehörigen Injektionsdüsen 8 sein. In diesem Fall bedarf es keiner Ausnehmungen 14. Der Schieber muss lediglich soweit verlagert werden, dass er in der jeweiligen Endposition die eine Injektionsdüse 8 freigibt und die andere Injektionsdüse 8 bedeckt.

Bei dem in den Fig. 3, 4, 7 und 8 dargestellten Ausführungsbeispiel ist im Bereich des Raumlufteinlasses 5 noch ein Wärmetauscher 16 vorgesehen, so dass hier auch ein Heizen gegebenenfalls auch ein zusätzliches Kühlen insbesondere der induzierten Raumluft (Pfeil 12) möglich ist.

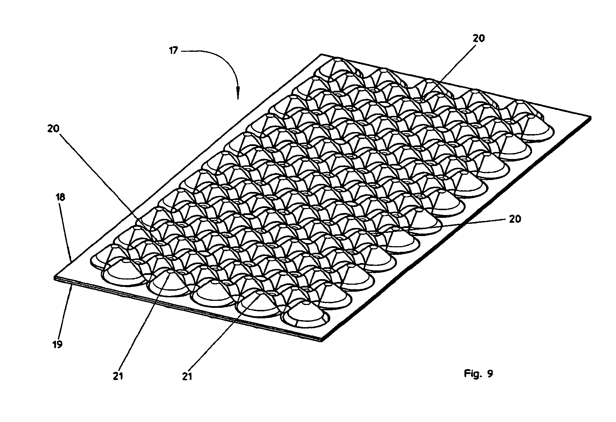

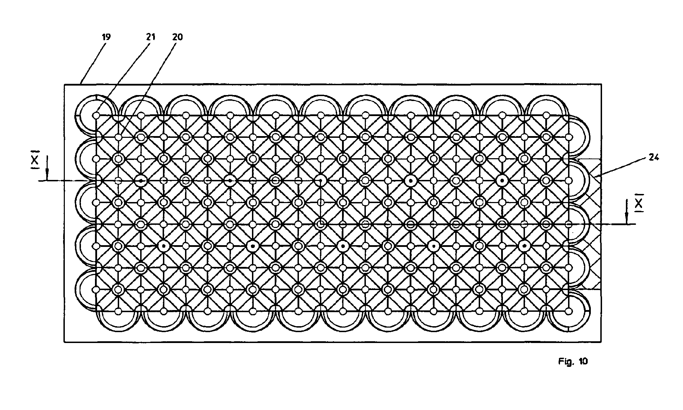

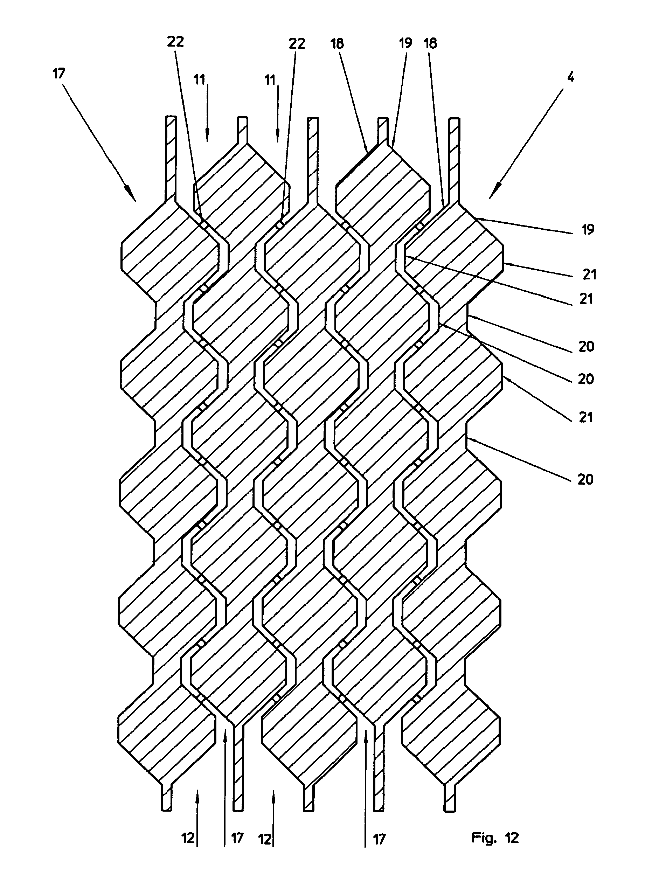

In den Fig. 9 bis 12 ist ein mögliches Ausführungsbeispiel für den konstruktiven Aufbau eines Phasenwechselmaterials 4 im Schnitt dargestellt. Wie Fig. 12 zu entnehmen ist, sind mehrere nebeneinander und parallel zueinander angeordnete Speicherräume 17 als Konstruktion vorgesehen, wobei jeder Speicherraum 17 mit dem Phasenwechselmaterial 4 befüllt ist. Die Größe eines jeden Speicherraums 17 kann beispielsweise etwa 15,4x31 cm betragen. Selbstverständlich ist beispielsweise auch eine quadratische Ausbildung möglich. Die Speicherräume 17 können beispielsweise in einem nicht dargestellten Rahmen gehalten sein.

Jeder Speicherraum 17 besteht aus zwei Speicherwänden 18, 19. Wie insbesondere Fig. 9 zu entnehmen ist, weist jede Speicherwand 18, 19 über ihre Fläche verteilt jeweils abwechselnd angeordnete erhabene und vertiefte Bereiche 20, 21 auf. Jede Speicherwand 18, 19 besteht aus einem im Wesentlichen eine einheitliche Wandstärke aufweisenden Material. Die Speicherwände 18, 19 sind auf ihrem gesamten äußeren Umfang des Speicherraumes 17 umfangsseitig miteinander verbunden.

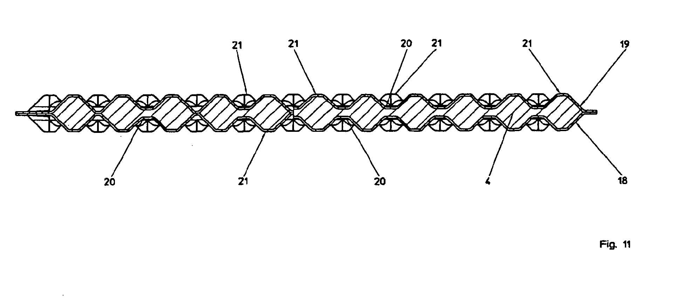

Wie Fig. 11 zu entnehmen ist, entsprechen sich die erhabenen Bereiche 20 und die vertieften Bereiche 21 einander mit umgekehrter Ausrichtung. Die beiden gegenüberliegenden Speicherwände 18, 19 eines Speicherraumes 17 sind dabei so zueinander angeordnet, dass die in Richtung der Speicherwand 18 weisenden erhabenen Bereiche 20 der Speicherwand 19 den in Richtung der Speicherwand 18 weisenden erhabenen Bereichen 20 der Speicherwand 18 in etwa gegenüberliegend angeordnet sind. Die vertieften Bereiche 21 beider Speicherwände 18, 19 eines Speicherraums 17 sind voneinander wegweisend ausgerichtet. Die erhabenen Bereiche 20 und die vertieften Bereiche 21 sind in etwa kegelstumpfartig ausgebildet, wobei die erhabenen Bereiche 20 und die vertieften Bereiche 21 oberseitig leicht abgeflacht sind.

Jeder Speicherraum 17 ist mit dem Phasenwechselmaterial 4 befüllt. Wie Fig. 11 zu entnehmen ist, berühren sich die gegenüberliegenden erhabenen Bereiche 20 der Speicherwände 18, 19 nicht, so dass auch in diesem Bereich das Phasenwechselmaterial 4 vorgesehen ist. Bei der Herstellung eines Speicherraumes 17 werden die beiden Speicherwände 18, 19, in einem kleinen Teilbereich 24, der schraffiert dargestellt ist, nicht miteinander verbunden. Nach Einfüllen des Phasenwechselmaterials 4 werden die Speicherwände 18, 19 auch in dem verbleibenden, bisher noch offenen Teilbereich 24 miteinander verbunden.

Es ist durchaus möglich, dass ― sofern eine Zirkulation des Phasenwechselmaterials 4 innerhalb eines Speicherraumes 17 gewünscht ist ― beispielsweise entlang einer Kante jedes Speicherraumes 17 nicht dargestellte Durchströmungsöffnungen vorgesehen sind, die ein Ein- und Ausströmen des Phasenwechselmaterials 4 in den betreffenden Speicherraum 17 ermöglichen.

Benachbarte Speicherräume 17 sind so angeordnet, dass die vertieften Bereiche 21 des einen Speicherraums 17 und die vertieften Bereiche 21 des anderen benachbarten Speicherraums 17 versetzt zueinander und in einem orthogonal zur generellen Erstreckung des Speicherraumes 17 gesehenen geringen Abstand liegen. Bei der dargestellten Anordnung ragt der vertiefte Bereich 21 des einen Speicherraums 17 in den erhabenen Bereich 20 des anderen benachbarten Speicherraums 17 hinein.

Aufgrund der identischen Ausbildung der versetzt zueinander angeordneten Speicherwände 18, 19 benachbarter Speicherräume 17 bildet sich - wie in Fig. 12 dargestellt - zwischen zwei benachbarten Speicherräumen 17 ein schmaler, sich im Wesentlichen über die ganze Fläche der Speicherräume 17 erstreckender Strömungskanal 22, der über die gesamte Kanallänge und die gesamte Kanalbreite eine in etwa einheitlicher Kanalhöhe aufweist. Durch den Strömungskanal 22 wird die Zuluft 11 oder die Raumluft 12 unter mehrfacher Umlenkung geleitet. Aufgrund der mehrfachen Umlenkung ist die Wärmetauschfläche groß. Aus Gründen der Übersichtlichkeit ist in Fig. 12 die jeweils dahinterliegende Reihe an erhabenen Bereichen 20 nicht dargestellt.

Wie in Fig. 12 dargestellt, können zwei benachbarte Speicherräume 17 mittels Distanzhalter 23 gegeneinander fixiert sein. Zur Erhöhung der Wärmeleitung kann in den Speicherräumen 17 zusätzlich ein wärmeleitendes Element, wie z. B. Metallwolle, vorgesehen sein.

## Patentansprüche

1. Deckenluftauslass für klimatechnische Anlagen, mit einem, insbesondere langgestreckt ausgebildeten, aus einer Gehäusewandung (1) bestehenden Gehäuse mit einem Zulufteinlass (3) und mit wenigstens einem raumseitigen Luftauslass (7), wobei der Zulufteinlass (3) in einen, vorzugsweise in dem Gehäuse befindlichen, und insbesondere sich längs des Gehäuses erstreckenden, Verteilerraum (2) mündet, wobei der Verteilerraum (2) zumindest eine in Richtung des Luftauslasses (7) weisende Injektionsdüse (8) aufweist und wobei raumseitig neben dem(den) Luftauslass (Luftauslässen) (7) ein Raumlufteinlass (5) zur Induktion von Raumlauft (12) vorgesehen ist, **dadurch gekennzeichnet, dass** im Bereich des Raumlufteinlasses (5) ein Phasenwechselmaterial (4) vorgesehen ist und zumindest einer Injektionsdüse (8) eine Einrichtung (9) zugeordnet ist, die zwischen einer ersten Einstellung und einer zweiten Einstellung veränderbar ist, wobei in der ersten Einstellung eine Induktion der durch das Phasenwechselmaterial (4) hindurch gezogenen Raumluft (12) durch Richten des zumindest überwiegenden Anteils der Zuluft (11) auf den Luftauslass (7) gegeben ist und in der zweiten Einstellung ein Strömen zumindest des überwiegenden Anteils der Zuluft (11) durch das Phasenwechselmaterial (4) hindurch in den zu belüftenden Raum gegeben ist.

2. Deckenluftauslass nach dem vorhergehenden Anspruch, **dadurch gekennzeichnet, dass** das Phasenwechselmaterial (4) auf der dem zu belüftenden Raum abgewandten Seite des Raumlufteinlasses (5) angeordnet ist.

3. Deckenluftauslass nach einem der vorhergehenden Ansprüche, **dadurch gekennzeichnet, dass** das Gehäuse im seitlichen Schnitt gesehen viereckig, insbesondere rechteckig, ausgebildet ist.

4. Deckenluftauslass nach einem der vorhergehenden Ansprüche, **dadurch gekennzeichnet, dass** der obere Bereich des Deckenluftauslasses als Verteilerraum (2) ausgebildet ist.

5. Deckenluftauslass nach einem der vorhergehenden Ansprüche, **dadurch gekennzeichnet, dass** der von dem Phasenwechselmaterial (4) beanspruchte Raum kleiner als die Breite des Gehäuses unter Bildung zumindest eines seitlichen Luftauslassspaltes (6) zwischen dem Phasenwechselmaterial (4) und der zum Phasenwechselmaterial (4) benachbarten Gehäusewandung (1) des Gehäuses ausgebildet ist.

6. Deckenluftauslass nach einem der vorhergehenden Ansprüche, **dadurch gekennzeichnet, dass** zumindest eine Einrichtung (9) als eine den Strömungsquerschnitt des Luftauslasses (7) veränderbare Klappe ausgebildet ist.

7. Deckenluftauslass nach einem der vorhergehenden Ansprüche, **dadurch gekennzeichnet, dass** in dem Verteilerraum (2) pro Luftauslass (7) zumindest zwei Injektionsdüsen (8) und eine entweder den Strömungsquerschnitt der einen oder den Strömungsquerschnitt der anderen Injektionsdüse (8) freigebende Einrichtung (9) derart angeordnet sind, dass die eine Injektionsdüse (8) zur Induktion der durch das Phasenwechselmaterial (4) hindurch gezogenen Raumluft (12) durch Richten des zumindest überwiegenden Anteils der Zuluft (11) auf den Luftauslass (7) ausgerichtet ist und die andere Injektionsdüse (8) zum Strömen zumindest des überwiegenden Anteils der Zuluft (11) durch das Phasenwechselmaterial (4) hindurch in den zu belüftenden Raum auf das Phasenwechselmaterial (4) ausgerichtet ist.

8. Deckenluftauslass nach dem vorhergehenden Anspruch, **dadurch gekennzeichnet, dass** zumindest eine Einrichtung (9) als Schieber ausgebildet ist.

9. Deckenluftauslass nach einem der Ansprüche 7 oder 8, **dadurch gekennzeichnet, dass** eine gemeinsame Einrichtung (9) für mehrere, insbesondere sämtliche, Injektionsdüsen (8) vorgesehen ist.

10. Deckenluftauslass nach einem der vorhergehenden Ansprüche, **dadurch gekennzeichnet, dass** im Bereich des Raumlufteinlasses (5) ein Wärmetauscher (16) angeordnet ist.

11. Deckenluftauslass nach einem der vorhergehenden Ansprüche, **dadurch gekennzeichnet, dass** zumindest zwei, vorzugsweise in einem Gehäuse angeordnete, in ihrer generellen Ausrichtung im wesentlichen jeweils zueinander parallel ausgerichtete und mit dem Phasenwechselmaterial (4) befüllte Speicherräume (17) vorgesehen sind, wobei jeder Speicherraum (17) von wenigstens zwei Speicherwänden (18, 19) begrenzt ist und die gegenüberliegenden Speicherwände (18, 19) zweier benachbarter Speicherräume (17) zwischen sich einen Strömungskanal (22) bilden, durch den die Zuluft (11) oder die Raumluft (12) strömt, wobei die Speicherwände (18, 19) der Speicherräume (17) abwechselnd angeordnete erhabene Bereiche (20) und vertiefte Bereiche (21) aufweisen.

12. Deckenluftauslass nach dem vorhergehenden Anspruch, **dadurch gekennzeichnet, dass** die der generellen Erstreckung des Speicherraumes (17) entsprechenden gegenüberliegenden Speicherwände (18, 19) benachbarter Speicherräume (17) hinsichtlich ihrer jeweiligen erhabenen Bereiche (20) und vertieften Bereiche (21) so aufeinander abgestimmt sind, dass in Strömungsrichtung (Pfeile 11 bzw. 12) gesehen im Bereich der gegenüberliegenden Speicherwände (18, 19) ein Strömungskanal (22) mit über die gesamte Kanallänge und die gesamte Kanalbreite in im wesentlichen etwa einheitlicher Kanalhöhe resultiert.

13. Deckenluftauslass nach einem der beiden vorhergehenden Ansprüche, **dadurch gekennzeichnet, dass** die erhabenen Bereiche (20) und die vertieften Bereiche (21) in etwa die gleiche Kontur haben.

14. Deckenluftauslass nach einem der vorhergehenden Ansprüche, **dadurch gekennzeichnet, dass** der Querschnitt dieser Bereiche (20, 21) sich zu den höchsten Teilbereichen der erhabenen Bereiche (20) bzw. zu den tiefsten Teilbereichen der vertieften Bereiche (21) hin verjüngt.

15. Deckenluftauslass nach einem der Ansprüche 11 bis 14, **dadurch gekennzeichnet, dass** zumindest eine Speicherwand (18, 19) als Blech, vorzugsweise als Aluminiumblech, ausgebildet ist.

16. Deckenluftauslass nach einem der Ansprüche 11 bis 15, **dadurch gekennzeichnet, dass** zumindest eine Speicherwand (18, 19) aus Kunststoff ist.

## Claims

1. Cover air outlet for air-conditioning systems, with an In particular elongated housing comprising a housing wall (1), with an incoming air inlet (3) and with at least one air outlet (7) on the room side, whereby the incoming air Inlet (3) opens into a distributor chamber (2) preferably In the housing and In particular extending along the length of the housing, whereby the distributor chamber (2) has at least one injection nozzle pointing In the direction of the air outlet (7) and whereby on the room side there is a room air inlet (5) for the induction of room air (12) in addition to the air outlet (outlets), **characterised in that** in the area of the room air inlet (5), there is a phase-change material (4) and at least one device (9) is allocated to an Injection nozzle (8), said device being adjustable between a first setting and a second setting, whereby In the first setting, there Is an induction of the room air (12) drawn through the phase-change material (4) by orienting the at least majority of the incoming air (11) to the air outlet (7) and, in the second setting, there is a flow of at least the majority of the incoming air (11) through the phase-change material (4) into the room to be ventilated.

2. Cover air outlet according to claim 1 **characterised in that** the phase-change material (4) Is disposed on the side of the room air inlet (5) turned away from the room to be ventilated.

3. Cover air outlet according to any one of the preceding claims **characterised in that** the housing is designed such that the lateral section Is quadrilateral, in particular rectangular.

4. Cover air outlet according to any one of the preceding claims **characterised in that** the upper area of the cover air outlet is designed as a distributor chamber (2).

5. Cover air outlet according to any one of the preceding claims **characterised in that** the room under the effect of the phase-change material (4) is smaller than the width of the housing with the formation of a lateral air outlet gap (8) between the phase-change material (4) and the housing wall (1) of the housing, said wall being that next to the phase-change material.

6. Cover air outlet according to any one of the preceding claims **characterised in that** at least one device (9) is designed as a flap which can be adjusted to the cross-section of the flow of the air outlet (7).

7. Cover air outlet according to any one of the preceding claims **characterised in that** in the distributor chamber (2) per air outlet (7), at least two injection nozzles (8) and a device (9) releasing either the flow cross-section of one or the flow cross-section of the other injection nozzle (8) are disposed in such a way that the one injection nozzle (8) is oriented for the induction of the room air (12) drawn through the phase-change material (4) by directing at least the majority of the incoming air (11) onto the air outlet (7) and the other injection nozzle (8) is oriented onto the phase-change material (4) for a stream of at least the majority of the incoming air (11) through the phase-change material (4) Into the room to be ventilated.

8. Cover air outlet according to claim 7 **characterised in that** at least one device (9) is designed as a slider.

9. Cover air outlet according to any one of claims 7 or 8 **characterised In that** a common device (9) for a number of, In particular all of, the injection nozzles (8) is provided.

10. Cover air outlet according to any one of the preceding claims **characterised in that** a heat exchanger (16) is disposed in the area of the room air inlet (5).

11. Cover air outlet according to any one of the preceding claims **characterised in that** at least two storage chambers (17) are provided, preferably disposed in a housing, in their general orientation basically oriented parallel to each other and filled with the phase-change material, whereby each storage chamber (17) Is delimited by at least two storage chamber walls (18, 19) and the storage chamber walls (18, 19) which are opposite each other form two neighbouring storage chambers (17) between which there is a flow channel (22), through which the incoming air (11) or the room air (12) flows, whereby the storage chamber walls (18, 19) of the storage chambers (17) have alternately disposed raised areas (20) and recessed areas (21).

12. Cover air outlet according to the claim 11 **characterised in that** the storage chamber walls (18, 19), lying opposite each other and corresponding to the general extension of the storage chamber (17), of the neighbouring storage chambers (17) with regard to their particular raised areas (20) and recessed areas (21) are designed In relation to each other In such a way that looking in the direction of flow (arrows 11 and 12), In the area of the storage chamber walls (18, 19) lying opposite each other, a flow channel (22) results with a basically fairly uniform channel height over the entire channel length and the entire channel width.

13. Cover air outlet according to any one of claims 11 or 12 **characterised In that** the raised areas (20) and the recessed areas (21) are approximately the same shape.

14. Cover air outlet according to any one of the preceding claims **characterised in that** the cross-section of these areas (20, 21) narrows to the highest parts of the raised areas (20) and to the lowest parts of the recessed areas (21).

15. Cover air outlet according to any one of claims 11 to 14 **characterised in that** at least one storage chamber wall (18, 19) is made of sheet metal, preferably aluminium sheet.

16. Cover air outlet according to any one of claims 11 to 15 **characterised in that** at least one storage chamber wall (18, 19) is made of plastic.

## Revendications

1. Sortie d'air de plafond pour des systèmes de climatisation, avec un boîtier réalisé notamment oblong, constitué d'une paroi de boîtier (1) et doté d'une entrée d'air d'alimentation (3) et d'au moins une sortie d'air (7) côté local, sachant que l'entrée d'air d'alimentation (3) débouche dans une chambre de distribution (2) se trouvant de préférence dans le boîtier et s'étendant notamment le long du boîtier, sachant que la chambre de distribution (2) présente au moins une buse d'injection (8) dirigée vers la sortie d'air (7) et sachant qu'une entrée d'air ambiant (5) est prévue côté local à côté de la ou des sortie(s) d'air (7) pour l'induction d'air ambiant (12), **caractérisée en ce qu'**un matériau à changement de phase (4) est prévu dans la région de l'entrée d'air ambiant (5) et au moins un organe (9) qui peut être modifié entre un premier réglage et un deuxième réglage est associé à la buse d'injection (8), sachant que dans le premier réglage, on obtient une induction de l'air ambiant (12) aspiré à travers le matériau à changement de phase (4) en dirigeant au moins une part prépondérante de l'air d'alimentation (11) vers la sortie d'air (7), et que dans le deuxième réglage, on obtient un écoulement d'au moins une part prépondérante de l'air d'alimentation (11) à travers le matériau à changement de phase (4), en direction du local à ventiler.

2. Sortie d'air de plafond selon la revendication précédente, **caractérisée en ce que** le matériau à changement de phase (4) est disposé sur le côté de l'entrée d'air ambiant (5) qui est opposé au local à ventiler.

3. Sortie d'air de plafond selon l'une des revendications précédentes, **caractérisée en ce que** le boîtier est réalisé quadrangulaire, en particulier rectangulaire, considéré en coupe latérale.

4. Sortie d'air de plafond selon l'une des revendications précédentes, **caractérisée en ce que** la région supérieure de la sortie d'air de plafond est conçue comme chambre de distribution (2).

5. Sortie d'air de plafond selon l'une des revendications précédentes, **caractérisée en ce que** l'espace occupé par le matériau à changement de phase (4) est prévu plus petit que la largeur du boîtier, en formant au moins un passage latéral de sortie d'air (6) entre le matériau à changement de phase (4) et la paroi (1) du boîtier qui est voisine du matériau à changement de phase (4).

6. Sortie d'air de plafond selon l'une des revendications précédentes, **caractérisée en ce qu'**au moins un organe (9) est réalisé sous forme de volet pouvant modifier la section d'écoulement de la sortie d'air (7).

7. Sortie d'air de plafond selon l'une des revendications précédentes, **caractérisée en ce qu'**au moins deux buses d'injection (8), et un organe (9) libérant soit la section d'écoulement de la première buse d'injection (8) soit la section d'écoulement de l'autre buse d'injection (8), sont disposés dans la chambre de distribution (2) pour chaque sortie d'air (7) de telle sorte que la première buse d'injection (8) est orientée pour l'induction de l'air ambiant (12) aspiré à travers le matériau à changement de phase (4) en dirigeant au moins une part prépondérante de l'air d'alimentation (11) vers la sortie d'air (7), et que l'autre buse d'injection (8) est orientée vers le matériau à changement de phase (4), pour l'écoulement d'au moins une part prépondérante de l'air d'alimentation (11) à travers le matériau à changement de phase (4), en direction du local à ventiler.

8. Sortie d'air de plafond selon la revendication précédente, **caractérisée en ce qu'**au moins un organe (9) est réalisé sous forme de tiroir.

9. Sortie d'air de plafond selon l'une des revendications 7 ou 8, **caractérisée en ce qu'**il est prévu un organe commun (9) pour plusieurs buses d'injection (8), en particulier pour toutes les buses d'injection (8).

10. Sortie d'air de plafond selon l'une des revendications précédentes, **caractérisée en ce qu'**un échangeur de chaleur (16) est disposé dans la région de l'entrée d'air ambiant (5).

11. Sortie d'air de plafond selon l'une des revendications précédentes, **caractérisée en ce qu'**il est prévu au moins deux chambres d'accumulation (17), disposées de préférence dans un boîtier, orientées dans leur orientation générale respective sensiblement parallèlement entre elles et remplies du matériau à changement de phase (4), sachant que chaque chambre d'accumulation (17) est délimitée par au moins deux parois d'accumulateur (18, 19) et que les parois d'accumulateur opposées (18, 19) de deux chambres d'accumulation voisines (17) forment entre elles un canal d'écoulement (22) par lequel s'écoule l'air d'alimentation (11) ou l'air ambiant (12), sachant que les parois d'accumulateur (18, 19) des chambres d'accumulation (17) présentent des régions en relief (20) et des régions en creux (21) alternativement disposées.

12. Sortie d'air de plafond selon la revendication précédente, **caractérisée en ce que** les parois d'accumulateur opposées (18, 19) de chambres d'accumulation voisines (17), parois qui correspondent à l'étendue générale de la chambre d'accumulation (17), sont en ce qui concerne leurs régions en relief (20) et leurs régions en creux (21) mutuellement adaptées de telle sorte que, considéré dans la direction d'écoulement (flèches 11 ou 12), on obtient dans la région des parois d'accumulateur opposées (18, 19) un canal d'écoulement (22) ayant une hauteur de canal sensiblement approximativement uniforme sur toute la longueur du canal et sur toute la largeur du canal.

13. Sortie d'air de plafond selon l'une des deux revendications précédentes, **caractérisée en ce que** les régions en relief (20) et les régions en creux (21) ont approximativement le même contour.

14. Sortie d'air de plafond selon l'une des revendications précédentes, **caractérisée en ce que** la section de ces régions (20, 21) se rétrécit en direction des régions partielles les plus hautes des régions en relief (20), respectivement des régions partielles les plus basses des régions en creux (21).

15. Sortie d'air de plafond selon l'une des revendications 11 à 14, **caractérisée en ce qu'**au moins une paroi d'accumulateur (18, 19) est réalisée sous forme de tôle, de préférence de tôle d'aluminium.

16. Sortie d'air de plafond selon l'une des revendications 11 à 15, **caractérisée en ce qu'**au moins une paroi d'accumulateur (18, 19) est en matière plastique.
